(19) Europäisches Patentamt
European Patent Office
Office européen des brevets

(11) **EP 2 576 687 B1**

(12) **EUROPEAN PATENT SPECIFICATION**

(45) Date of publication and mention
of the grant of the patent:
**12.09.2018 Bulletin 2018/37**

(51) Int Cl.:
***C08L 23/02*** *(2006.01)*     ***C08L 23/06*** *(2006.01)*
***C08L 23/08*** *(2006.01)*

(21) Application number: **11727845.7**

(22) Date of filing: **25.05.2011**

(86) International application number:
**PCT/US2011/037894**

(87) International publication number:
**WO 2011/150053 (01.12.2011 Gazette 2011/48)**

(54) **POLYMER COMPOSITIONS, METHODS OF MAKING THE SAME, AND ARTICLES PREPARED FROM THE SAME**

POLYMERZUSAMMENSETZUNGEN UND HERSTELLUNGSVERFAHREN DAFÜR

COMPOSITIONS POLYMÈRES LEURS PROCÉDÉS DE FABRICATION ET ARTICLES PRÉPARÉS À PARTIR DE CES COMPOSITIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.05.2010 US 348876 P**

(43) Date of publication of application:
**10.04.2013 Bulletin 2013/15**

(73) Proprietor: **Dow Global Technologies LLC Midland, MI 48674 (US)**

(72) Inventors:
• **LIANG, Wenbin**
  **Pearland, TX 77584 (US)**
• **LIU, Lizhi**
  **Lake Jackson, TX 77566 (US)**
• **GE, Shouren**
  **Lake Jackson, TX 77566 (US)**

(74) Representative: **Boult Wade Tennant LLP Verulam Gardens 70 Gray's Inn Road London WC1X 8BT (GB)**

(56) References cited:
**WO-A1-2009/097560     WO-A1-2009/097565
WO-A1-2009/114661     WO-A1-2010/033601
US-A1- 2006 173 123**

• **BARTCZAK ET AL: "Influence of molecular parameters on high-strain deformation of polyethylene in the plane-strain compression. Part II. Strain recovery", POLYMER, ELSEVIER SCIENCE PUBLISHERS B.V, GB, vol. 46, no. 23, 14 November 2005 (2005-11-14), pages 10339-10354, XP005115612, ISSN: 0032-3861, DOI: 10.1016/J.POLYMER.2005.07.096**

EP 2 576 687 B1

**Description**

BACKGROUND OF THE INVENTION

Oil-extended or oil-containing thermoplastic elastomers (TPE) compositions are widely used for applications, such as automotive, consumer durables, sporting goods, health & hygiene, toys, and construction materials. Such compositions require oil to provide the desired soft feel, to improve processing, and to reduce the composition cost. However, it is often encountered that oil exudates, or bleeds out, of the fabricated articles, which may negatively affect the physical properties of the composition, such as causing surface stickiness and material brittleness. The oil exudation may even render the parts unacceptable in performance. The ability of a composition to retain oil is an even greater challenge when such compositions are used to form articles for use over long periods of time, and/or articles subject to temperature fluctuations.

It is generally believed that amorphous elastomers may exhibit a higher capacity to retain oil and to reduce oil bleeding, compared to a semi-crystalline polymers. Styrene-based thermoplastic elastomers have been added to elastomer compositions in order to increase the ability of the composition to withhold oil. Similarly, elastomers with lower crystallinity have been used for the same purpose. However, these compositions are often limited by physical properties (such as tensile strength) and processing requirements of the elastomer. At moderate oil levels, the use of elastomer compositions with low crystallinity, the use of styrenic block copolymers, or the use of EPDM hydrocarbon rubbers, may show some improvement in, or delay, the oil exudation. However, with increase levels of oil, severe oil exudation (bleed out) still occurs with these compositions over time or through temperature fluctuation cycles, which adversely affects the performance properties of the formed articles.

There is a need for olefin-based compositions that can be used to form parts with significantly reduced, or without any, oil exudation for extended periods of time.

U.S. Patent 5,505,773 discloses a thioxtropic gel compositions comprising polybutene, polyethylene wax, hydrophobic fumed silica, and optionally, an antioxidant. These compositions do not contain substantial amounts of elastomers.

U.S. Patent 5,741,843 discloses sealant compositions comprising elastomeric thermoplastic polymers, comprising diblock and triblock copolymers, a primary extender such as polybutene oil, a secondary extender, such as mineral oil, and/or fumed silica. The composition is believed to form an interpenetrating polymer network to reduce or eliminate the exudation of the extender.

WO-A-2009/097560 discloses a composition comprising at least one ethylene/$\alpha$-olefin block interpolymer, comprising one or more hard segments and one or more soft segments having a difference in mole percent $\alpha$-olefin content, wherein the ethylene/$\alpha$-olefin block interpolymer is characterized by a molecular weight distribution Mw/Mn, in the range of from 1.4 to 2.8 and by an average block index greater than zero and up to 1.0; and wherein the ethylene/$\alpha$-olefin block interpolymer is mesophase separated.

US-A-2006/0173123 relates to a composition comprising more than 25 weight % (based on the weight of the composition) of one or more ethylene polymers having an $M_w$ of 20,000 g/mole or more and at least 0.1 weight % of a liquid hydrocarbon modified where the modifier has: 1) a viscosity index of 120 or more, and 2) an kinematic viscosity of 3 to 3000 cSt at 100°C, and 3) a pour point of -10°C or less, and 4) a flash point of 200°C or more; and wherein the modifier contains less than 5 weight % of functional groups selected from hydroxide, aryls, substituted aryls, halogens, alkoxys, carboxylates, esters,

acrylates, oxygen, nitrogen and carboxyl, based upon the weight of the modifier.

Additional compositions are disclosed in the following: U.S. Patent Nos. 5,082,348; 7,101,247; 6,905,431; 5,994,450; 6,026,527; 6,835,015 and US 6,413,458, and U.S. Publication Nos. 2003/0236313 and 2004/0048018.

As discussed, there is a need to develop new compositions with significantly reduced oil bleed (rate), and which can be used to form articles with no, or no detectable, oil exudation. These needs and others have been met by the following invention.

SUMMARY OF THE INVENTION

The invention provides a composition comprising a first composition that comprises an ethylene-based polymer and an oil,

wherein the first composition has the following property as determined by Small Angle X-Ray Scattering: ($L_{oil}$ -$L_{no\text{-}oil}$)/$L_{no\text{-}oil}$ > 10%,
where $L_{oil}$ is the long period of the polymer with oil, and
$L_{no\text{-}oil}$ is the long period of the polymer without oil, and wherein the ethylene-based polymer is a low density polyethylene (LDPE) with a molecular weight distribution (Mw(conv)/Mn(conv)) of greater than or equal to 7.

BRIEF DESCRIPTION OF THE DRAWINGS

Figure 1 is a schematic depicting limited oil inclusion in the lamellar stacks (represents lamella, and - represents oil). Figure la (no oil) and Figure lb (oil inclusion).

Figure 2 is a schematic depicting exfoliated lamellae in the presence of oil (represents lamella, and - represents oil). Figure 2a (no oil) and Figure 2b (oil inclusion).

Figure 3 is a schematic showing how L, La and Lc are obtained from a correlation function curve obtained from SAXS (Small Angle X-Ray Scattering) data.

Figure 4 depicts WAXD patterns of LDPE 21 control, LDPE 21 thermally treated at 50°C with oil for four days, and LDPE 21 thermally treated at 120°C with oil for one day.

Figure 5 depicts WAXD diffraction patterns of EA0368 control and EA0386 after thermal treatment at 50°C in oil for four days.

Figure 6 depicts the SAXS profiles of LDPE 3I with and without oil, after thermal treatment at 100°C for a day.

Figure 7 depicts the SAXS profiles of LDPE 5I without and with oil after thermal treatment at 100°C for a day

Figure 8 depicts TEM (Transmission Electron Microscopy) images of LDPE 5I with and without oil.

Figure 9 depicts SAXS profiles of LDPE 0I with and without oil after thermal treatment at 100°C for a day.

Figure 10 depicts TEM images of LDPE 0I with and without oil.

Figure 11 depicts an AFM (Atomic Force Microscopy) of LDPE 0I with oil.

Figure 12 depicts AFM micrographs of an inventive composition and a comparative composition.

Figure 13 depicts optical images of three interfaces, each formed from an "oil-containing elastomeric polymer composition" and the inner surface of a plastic bag.

DETAILED DESCRIPTION OF THE INVENTION

As discussed above, the invention provides a composition comprising a first composition that comprises an ethylene-based polymer and an oil,

wherein the first composition has the following property as determined by Small Angle X-Ray Scattering:

$(L_{oil} - L_{no\text{-}oil})/L_{no\text{-}oil} > 10\%$, preferably > 20%, more preferably > 40%, where $L_{oil}$ is the long period of the polymer with oil, and

$L_{no\text{-}oil}$ is the long period of the polymer without oil and wherein the ethylene-based polymer is a low density polyethylene (LDPE) with a molecular weight distribution (Mw(conv)/Mn(conv)) of greater than 7.

The long period is obtained from Lorentz-corrected Small Angle X-Ray Scattering (SAXS) profile.

An inventive composition may comprise a combination of two or more embodiments as described herein.

In one embodiment, first composition has the following property as determined by Small Angle X-Ray Scattering: $[[L_A/(L_A + L_C)]_{OIL} - [L_A/(L_A + L_C)]_{NO\ OIL}] / [L_A/(L_A + L_C)]_{NO\ OIL} \geq 7\%$, preferably $\geq 15\%$, more preferably $\geq 20\%$, where $L_A$ is the average amorphous lamellar thickness, and $L_C$ is the average crystalline lamellar thickness.

In one embodiment, the $(L_{oil} - L_{no\text{-}oil}) / L_{no\text{-}oil}$ is less than 200%, or less than 150%, or less than 125%.

In one embodiment, the $[[L_A/(L_A + L_C)]_{OIL} - [L_A/(L_A + L_C)]_{NO\ OIL}] / [L_A/(L_A + L_C)]_{NO\ OIL}$ is less than 70%, or less than 60%, or less than 50%.

In one embodiment, the ethylene-based polymer has a molecular weight ratio, Mz(abs)/Mz(conv) greater than 2.2.

In one embodiment, the ethylene-based polymer has a MR value less than 200 g/10 min, preferably less than 150 g/10 min, where MR = I2 x RR.

In one embodiment, the ethylene-based polymer has a number average molecular weight (Mn(conv)) greater than 2800 g/mole, as determined by GPC.

The ethylene-based polymer is a low density polyethylene (LDPE).

In one embodiment, the ethylene-based polymer has a density from 0.900 to 0.940 g/cc.

In one embodiment, the ethylene-based polymer has melt index (I2) from 0.2 to 50 g/10 min.

The ethylene-based polymer has a molecular weight distribution (Mw(conv)/Mn(conv)) greater than, or equal to 7, preferably greater than or equal to 9.

In one embodiment, the ethylene-based polymer has a melting temperature greater than, or equal to, 100°C.

In one embodiment, the ethylene-based polymer is present in an amount from 2 to 50 weight percent, based on the weight of the composition.

In one embodiment, the oil is present in an amount from 10 to 70 weight percent, based on the weight of the composition.

In one embodiment, the oil is present in an amount from 10 to 50 weight percent, based on the weight of the composition.

In one embodiment, the composition further comprises an olefin-based polymer.

In one embodiment, the olefin-based polymer is present in an amount from 20 to 80 weight percent, based on the weight of the composition.

In one embodiment, the oil is present in an amount from 35 to 90 weight percent, based on the sum weight of the ethylene-based polymer and the oil.

In one embodiment, the oil is present in an amount from 35 to 70 weight percent, based on the sum weight of the ethylene-based polymer and the oil.

In one embodiment, the oil is present in an amount from 35 to 50 weight percent, based on the sum weight of the ethylene-based polymer and the oil.

An inventive composition may comprise a combination of two or more embodiments as described herein.

It has been discovered that oil-swelled lamellar stacks of the ethylene-based polymers of the invention, such as certain LDPE, serve as a barrier for reducing oil bleed. Amorphous lamellar thickness over the long period (average crystalline lamellar thickness + average amorphous lamellar thickness, each derived from small angle X-ray scattering) increases after inclusion of oil, as measured by the changes in the ratio, with and without oil, of the "amorphous lamellar thickness to the long period (crystalline lamellar thickness + amorphous lamellar thickness)." In comparison, other semi-crystalline olefin polymers, such as high density polyethylene, polypropylene homopolymer, linear low density polyethylene, olefin multiblock copolymers and homogeneously branched ethylene/alphaolefin copolymers, show no substantial oil inclusion into the amorphous lamellar region upon oil treatment,

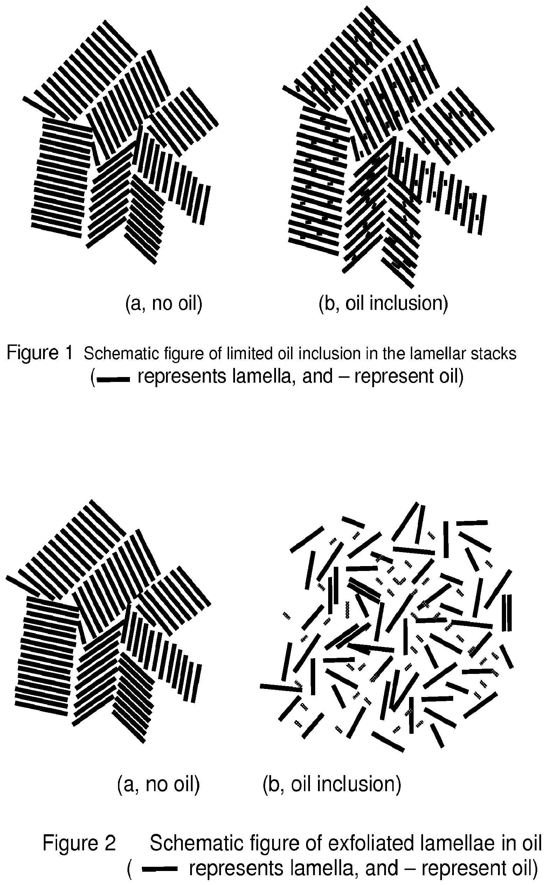

Figure 1 is schematic figure showing the limited oil inclusion in alternating crystalline-amorphous lamellar stacks, where the longer line represents crystal lamellae and the short line represents oil in the amorphous lamella. Figure 2 is a schematic showing the destruction of lamellar packing when significant oil gets into the polymer.

It has been discovered that the crystalline morphology of the inventive oil-extended polymer shows an unexpected high amount of intercalated lamellar stacks (insertion of oil between lamellar stacks) and/or exfoliated single crystal lamellae (predominantly single crystal lamella in an oil-rich matrix). These regions of expanded lamellae (intercalation - d space change as observed in SAXS and AFM image) and dispersed lamellae (exfoliation - single or very thin stacks with only a couple of lamellae dispersed in oil matrix as observed by AFM) result in a highly swollen spherulitic morphology (as observed by low magnification TEM). This highly swollen spherulitic morphology is a new and unexpected discovery, and is desirable for reducing oil bleed of oil-extended, soft elastomeric compositions. It has also been discovered that, in comparison to thermoplastic elastomer compositions of the prior art, the inventive compositions exhibit superior oil-retaining ability.

Furthermore, fabricated articles of the inventive polymer compositions may retain desirable, low-gloss surface for extended periods of time, with reduced, or completely eliminated, oil exudation to the surface of the fabricated articles. In addition, the swollen spherulitic morphology contains smaller crystallites (lamellae), which, in turn, result in less light scattering, and thus, should lead to improved optical properties, such as low haze, high clarity and transparency.

**Inventive Composition**

An inventive composition comprises a first composition, and optionally, other polymers and/or additives.

The first composition comprises an ethylene-based polymer and an oil, and has the following property as determined by Small Angle X-Ray Scattering:

$(L_{oil} - L_{no\text{-}oil}) / L_{no\text{-}oil} > 10\%$, preferably > 20%, more preferably > 40%,
where $L_{oil}$ is the long period of the polymer with oil, and
$L_{no\text{-}oil}$ is the long period of the polymer without oil.

In one embodiment, the first composition has the following property as determined by Small Angle X-Ray Scattering: $[[L_A/(L_A + L_C)]_{OIL} - [L_A/(L_A + L_C)]_{NO\ OIL}] / [L_A/(L_A + L_C)]_{NO\ OIL} \geq 7\%$, preferably $\geq 15\%$, more preferably $\geq 20\%$, where $L_A$ is the average amorphous lamellar thickness, and $L_C$ is the average crystalline lamellar thickness.

In one embodiment, the ethylene-based polymer has a density from 0.900 to 0.940 g/cc, preferably from 0.910 to 0.935 g/cc, and more preferably from 0.915 to 0.930 g/cc (1 cc = 1 cm$^3$).

In one embodiment, the ethylene-base polymer is formed from a high pressure, free radical process. In a further embodiment, the ethylene-based polymer is formed by high pressure autoclave or tubular process.

The ethylene-based polymer is a low density polyethylene (LDPE). Suitable LDPE resins are available from The Dow Chemical Company.

In one embodiment, the ethylene-based polymer has a percent crystallinity greater than, or equal to, 28 percent, preferably greater than, or equal to, 30 percent, and more preferably greater than, or equal to, 35 percent, as determined by DSC.

In one embodiment, the ethylene-based polymer has a percent crystallinity less than, or equal to, 50 percent, preferably less than, or equal to, 48 percent, and more preferably less than, or equal to, 46 percent, as determined by DSC.

In one embodiment, the ethylene-based polymer has a melting point, Tm, greater than, or equal to, 100°C, preferably greater than, or equal to, 104°C, more preferably greater than, or equal to, 106°C, and even more preferably greater than, or equal to, 108°C, as determined by DSC.

In one embodiment, the ethylene-based polymer has a melting point, Tm, less than, or equal to, 128°C, preferably less than, or equal to, 125°C, and more preferably less than, or equal to, 122°C, as determined by DSC.

The ethylene-based polymer has a molecular weight distribution (Mw(conv)/Mn(conv)) greater than, or equal to, 7, and preferably greater than, or equal to, 9, as determined by GPC.

In one embodiment, the ethylene-based polymer has a molecular weight distribution (Mw(conv)/Mn(conv)) less than, or equal to, 50, preferably less than, or equal to, 40, more preferably less than, or equal to, 30, and even more preferably less than, or equal to, 20, as determined by GPC.

In one embodiment, the ethylene-based polymer has a molecular weight ratio (Mz(abs)/Mz(conv)) greater than, or equal to, 2.2, preferably greater than, or equal to, 2.5, and more preferably greater than, or equal to, 2.9, as determined by GPC.

In one embodiment, the ethylene-based polymer has a molecular weight ratio (Mz(abs)/Mz(conv)) less than, or equal to, 15, preferably less than, or equal to, 12, and more preferably less than, or equal to, 7.0, as determined by GPC.

In one embodiment, the ethylene-based polymer has a molecular weight (Mn(conv)) greater than, or equal to, 2800 g/mole preferably greater than, or equal to, 4000, and more preferably greater than, or equal to, 8,000, as determined by GPC.

In one embodiment, the ethylene-based polymer has a molecular weight (Mn(conv)) less than, or equal to, 30,000 g/mole preferably less than, or equal to, 25,000, and more preferably less than, or equal to, 22,000, as determined by GPC.

In one embodiment, the ethylene-based polymer has a "MR" less than, or equal to, 200 g/10 min, preferably less than, or equal to, 150 g/10 min, and more preferably less than, or equal to, 125 g/10 min, and even more preferably less than, or equal to, 100 g/10 min. Here M is the melt index (I2, 2.16 kg, 190°C) in g/10 min, and R is the rheology ratio (RR) or V0.1/V100, where V0.1 is the melt viscosity of polymer at 190°C, measured at a shear rate of 0.1 rad/sec, and V100 is the melt viscosity of polymer at 190°C, measured at a shear rate of 100 rad/sec. Melt viscosities are measured under a nitrogen atmosphere, using a dynamic mechanical spectrometer (such as a RMS-800 or ARES from Rheometrics), under a dynamic sweep from 0.1 to 100 rad/sec.

In one embodiment, the ethylene-based polymer has a "MR" greater than, or equal to, 10, preferably greater than, or equal to, 12, and more preferably greater than, or equal to, 14.

In one embodiment, the ethylene-based polymer has Mw(conv) greater than 20,000 g/mol, preferably greater than 40,000 g/mol, more preferably greater than 60,000 g/mol; a rheology ratio (RR) greater than 15, preferably greater than 30; and a percent crystallinity of greater 30, preferably greater than 32, and more preferably greater than 35, as determined by DSC.

In one embodiment, the ethylene-based polymer is present in an amount from 2 to 50 weight percent, preferably from 5 to 45 weight percent, and more preferably from 7 to 40 weight percent, based on the weight of the composition.

The ethylene-based polymer may comprise a combination of two or more embodiments as described herein.

Examples of oils include, but are not limited to, mineral oils or processing oils (may include paraffinic, naphthenic, aromatic or mixed types), or other processing or softening additives such as plasticizers and polybutene. Oils include, but are not limited to, petroleum oils, such as aromatic and naphthenic oils; polyalkylbenzene oils; synthetic oils, mineral oils, organic acid monoesters, such as alkyl and alkoxyalkyl oleates and stearates; organic acid diesters, such as dialkyl, dialkoxyalkyl, and alkyl aryl phthalates, terephthalates, sebacates, adipates, and glutarates; glycol diesters, such as tri-, tetra-, and polyethylene glycol dialkanoates; trialkyl trimellitates; trialkyl, trialkoxyalkyl, alkyl diaryl, and triaryl phosphates; chlorinated paraffin oils; coumarone-indene resins; pine tars; vegetable oils, such as castor, tall, rapeseed, and soybean oils and esters and epoxidized derivatives thereof.

In one embodiment, the oil is selected from petroluem oils, synthetic oils, chlorinated paraffin oils, paraffinic mineral oil, white mineral oil or vegetable oils, and preferably selected from paraffinic mineral oil, or white mineral oil.

In one embodiment, the oil is present in an amount from 10 to 70 weight percent, preferably from 15 to 65 weight percent, and more preferably from 20 to 60 weight percent, based on the weight of the composition.

In one embodiment, the oil is present in an amount from 15 to 50 weight percent, preferably from 15 to 65 weight percent, and more preferably from 20 to 45 weight percent, based on the weight of the composition.

In one embodiment, the oil is present in an amount from 35 to 90 weight percent, preferably from 40 to 90 weight percent, and more preferably from 45 to 90 weight percent, based on the sum weight of the ethylene-based polymer and the oil.

In one embodiment, the oil is present in an amount from 45 to 90 weight percent, preferably from 50 to 85 weight percent, and more preferably from 55 to 80 weight percent, based on the sum weight of the ethylene-based polymer and the oil.

In one embodiment, the first composition has a percent crystallinity greater than, or equal to, 25, preferably greater than, or equal to, 30 percent, and more preferably greater than, or equal to, 35 percent, as determined by DSC.

In one embodiment, the first composition has a percent crystallinity less than, or equal to, 50 percent, preferably less than, or equal to, 48 percent, and more preferably less than, or equal to, 46 percent, as determined by DSC.

In one embodiment, the first composition is formed by mixing the ethylene-based polymer and oil at a high shear mixing equipment, such as an extruder or a twin-screw extruder, at elevated temperature.

In one embodiment, the first composition is formed by imbibing oil into the ethylene-based polymer at a temperature greater than, or equal to, 80°C, for at least 4 hours. In a further embodiment, the temperature is from 80°C to 120°C, and the time is from 4 to 24 hours.

The first composition may comprise a combination of two or more embodiments as described herein.

In one embodiment, the overall, inventive composition further comprises an olefin-based polymer.

In one embodiment, the olefin-based polymer is an ethylene-based polymer or a propylene-based polymer.

In one embodiment, the olefin-based polymer has a melt index (I2, 2.16 kg, 190°C) or a melt flow rate (MFR, 2.16 kg, 230°C) less than 25 g/10 min, preferably less than 10 g/10 min, more preferably less than 5 g/10min, most preferably less than 2 dg/min or lower.

In one embodiment, the olefin-based polymer has a melt index (I2, 2.16 kg, 190°C) or a melt flow rate (MFR, 2.16 kg, 230°C) greater than, or equal to, 0.05 g/10 min, preferably greater than, or equal to, 0.1 g/10 min, more preferably greater than, or equal to, 0.5 g/10 min.

In one embodiment, the olefin-based polymer is an olefin multi-block interpolymer, and preferably an ethylene/α-olefin multi-block copolymer.

The olefin multi-block interpolymers and copolymers and their preparation and use, are described in WO 2005/090427, US2006/0199931, US7608668, US2006/0199914, US2006/0199912, US7671106, US7579408, US2006/0199908, US7355089, US7622529, US7671131, US7524911, US7662881, US2006/0199887, US7514517, US7666918, US7687442, US7582716, US7504347 and US2006/0199983; each is fully incorporated herein by reference.

In one embodiment, the olefin-based polymer is a homogeneously branched linear interpolymer, and preferably a copolymer; or a homogeneous branched substantially linear interpolymer, and preferably a copolymer.

In one embodiment, the olefin-based polymer is a homogeneously branched linear interpolymer, and preferably a copolymer. Homogeneously branched linear interpolymers are disclosed for example, by Elston in US Patent No. 3,645,992, and subsequent processes to produce such polymers, using bis-metallocene catalysts, have been developed, as shown, for example, in EP 0 129 368; EP 0 260 999; US Patent No. 4,701,432; US Patent No. 4,937,301; US Patent No. 4,935,397; US Patent No. 5,055,438; and WO 90/07526.

In one embodiment, the olefin-based polymer is a homogeneous branched substantially linear interpolymer, and preferably a copolymer. The homogeneously branched substantially linear ethylene/α-olefin interpolymers are described in US Patent Nos. 5,272,236; 5,278,272; 6,054,544; 6,335,410 and 6,723,810.

In one embodiment, the inventive composition is prepared using batch compounding processes, such as Banbury mixers; continuous melt mixing/compounding processes, such as single screw extruders, twin screw extruders, roll mills, HAAKE-type mixers, and/or other processes known in the art.

An inventive composition may comprise one or more additives. Suitable additives include, but are not limited to, antioxidants, UV stabilizers, vulcanizing agents, foaming agents, flame retardants, plasticizers, pigments, curing agents, and combinations thereof, and preferably antioxidants, UV stabilizers, flame retardants, pigments, and combinations thereof, and more preferably antioxidants, UV stabilizers, and combinations thereof.

In one embodiment, the composition further comprises one or more inorganic filler(s). In a further embodiment, the filler is selected from calcium carbonate, fumed silica, alumina, TiO2, kaolin, or combinations thereof.

In one embodiment, the composition comprises from 0.1 to 50 weight percent of an inorganic filler, based on the weight of the composition.

An inventive composition may comprise a combination of two or more embodiments as described herein.

The invention also provides an article comprising at least one component formed from an inventive composition. The inventive composition can be used for articles that require flexibility, wear resistance, and desirable appearance. Articles include, but are not limited to, appliance gaskets and other consumer durables, automotive parts, such as door seals and instrument panels, window profile seals, sporting goods, health & hygiene products, and toys.

Articles suited for these applications may be fabricated through injection molding, over-molding, blow-bolding, extrusion, profile extrusion, casting, calendaring, and other processes.

An inventive article may comprise a combination of two or more embodiments as described herein.

DEFINITIONS

The term "polymer," as used herein, refers to a polymeric compound prepared by polymerizing monomers, whether of the same or a different type. The generic term polymer thus embraces the term homopolymer (employed to refer to polymers prepared from only one type of monomer), and the term interpolymer as defined hereinafter.

The term "interpolymer," as used herein, refers to polymers prepared by the polymerization of at least two different types of monomers. The generic term interpolymer thus includes copolymers (employed to refer to polymers prepared from two different types of monomers), and polymers prepared from more than two different types of monomers.

The term "olefin-based polymer," as used herein, refers to a polymer that comprises, in polymerized form, a majority weight percent of an olefin, for example ethylene or propylene (based on the weight of the polymer), and optionally one or more other comonomers.

The term "ethylene-based polymer," as used herein, refers to a polymer that comprises, in polymerized form, a majority weight percent of ethylene (based on the weight of the polymer), and optionally one or more other comonomers.

The term "propylene-based polymer," as used herein, refers to a polymer that comprises, in polymerized form, a majority weight percent of propylene (based on the weight of the polymer), and optionally one or more other comonomers.

The term "exfoliated," as used herein, refers to spread or extension of individual lamellae or small stacks of lamellae. For example, see the schematic of Figure 2(b).

The term "intercalated," as used herein, refers to the insertion of molecules between two other molecules. In the present invention, intercalation refers to the insertion of oil between the crystal lamellae stacks of the ethylene-based polymer. For example, see the schematic of Figure 1(b).

The term, "lamellar stacks,' as used herein, refers to of alternating lamellae containing crystalline and amorphous regions. See for example, the schematic of Figure 1(a) (no oil). These stacks are typically formed in semi crystalline polymers.

The term "composition," as used herein, includes a mixture of materials, which comprise the composition, as well as reaction products and decomposition products formed from the materials of the composition.

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of' excludes from the scope of any succeeding recitation any other component, step or procedure, excepting those that are not essential to operability. The term "consisting of' excludes any component, step or procedure not specifically delineated or listed.

TEST METHODS

Melt index (I2) of an ethylene-based polymer is measured in accordance with ASTM D-1238-04, condition 190°C/2.16 kg. Melt index (I5) of an ethylene-based polymer is measured in accordance with ASTM D-1238-04, condition 190°C/5.0 kg. Melt index (I10) of an ethylene-based polymer is measured in accordance with ASTM D-1238-04, condition 190°C/10.0 kg. High load melt index (I21) of an ethylene-based polymer is measured in accordance with ASTM D-1238-04, condition 190°C/21.0 kg. For propylene-based polymers, the melt flow rate (MFR) is measured in accordance with ASTM D-1238-04, condition 230°C/2.16 kg.

Polymer density is measured in accordance with ASTM D-792-08.

*Wide Angle X-Ray Diffraction (WAXD)*

The samples were analyzed in a transmission mode using a GADDS system from BRUKER-AXS, with a multi-wire two-dimensional HISTAR detector. Samples were aligned with a laser pointer and a video-microscope. The test sample was about 0.5 millimeter in thickness.

Data were collected using copper Kα radiation (at a wavelength of 0.154nm (1.54 angstroms)) with a sample-to-detector (SDD) distance of 6 cm. The X-ray beam was collimated to 0.3 mm. For the 2D area detector in transmission mode, the radial distance from the center, r, is equal to SDD x (tan 2θ), where 2θ is equal to the angle between the incident x-ray beam and the diffracted beam. For Cu Kα radiation and an SDD of 6 cm, the range of 2θ actually measured was about 0° to 35°. The azimuthal angle, Φ, ranged from 0° to 360°. The scattering area (or intensity) from amorphous segments, which lies underneath the diffraction area from the crystal phase, was determined by profile fitting of a diffraction profile, using an appropriate software package (for example, JADE software, from Materials Data, Inc.). Then, the crystallinity, $X_C$, was calculated based on the ratio of these two area values as given below in Equation 1:

$$X_c = \left[\, 1 \;-\; \frac{I_{Am}}{I_{Total}} \,\right] \qquad \text{(Eqn. 1)},$$

where $I_{Am}$ is the integrated intensity, after background subtraction, for the amorphous scattering, and $I_{Total}$, is the total intensity measured and incorporates the scattering and diffraction of both polymer phases, crystalline and amorphous phases (again, after background subtraction).

*Small Angle X-Ray Scattering (SAXS)*

SAXS data were collected using a RIGAKU MICRO SOURCE X-ray Generator with "Cu radiation" and an area detector. The samples were positioned in the beam using a precision step motor controlled via a PC (LABVIEW software). The scattering data I(q) were corrected for air background (I(q)b) before analysis, where q is a wave vector, and is equal to $(4\pi/\lambda)\sin(\theta/2)$, with $\lambda$ and $\theta$ being the x-ray wavelength and scattering angle, respectively. The test sample was about one millimeter in thickness, and could be cut from a pellet or molded plaque. The surface area depends on the size of the x-ray beam, and can be adjusted accordingly.

For alternating crystalline and amorphous lamellar stacks formed in the ethylene-based polymers, the long period (L), the sum of the average amorphous lamellar thickness, and $L_C$ is the average crystalline lamellar thickness, can be evaluated in two ways.

Method 1

In the first method (Method 1), the long period, L, is determined from the Lorentz-corrected small angle scattering profile, "I(q)q2 vs. q", where I(q) is the scattering intensity and q is scattering vector, and is defined by q = $4\pi\sin(\theta/2)/\lambda$, where $\lambda$ is the wavelength of the x-ray and $\theta$ is the scattering angle.
The long period can be derived from the following equation:

$$L = 2\pi/q^*,$$

where q* is the peak position from the Lorentz corrected SAXS profile.

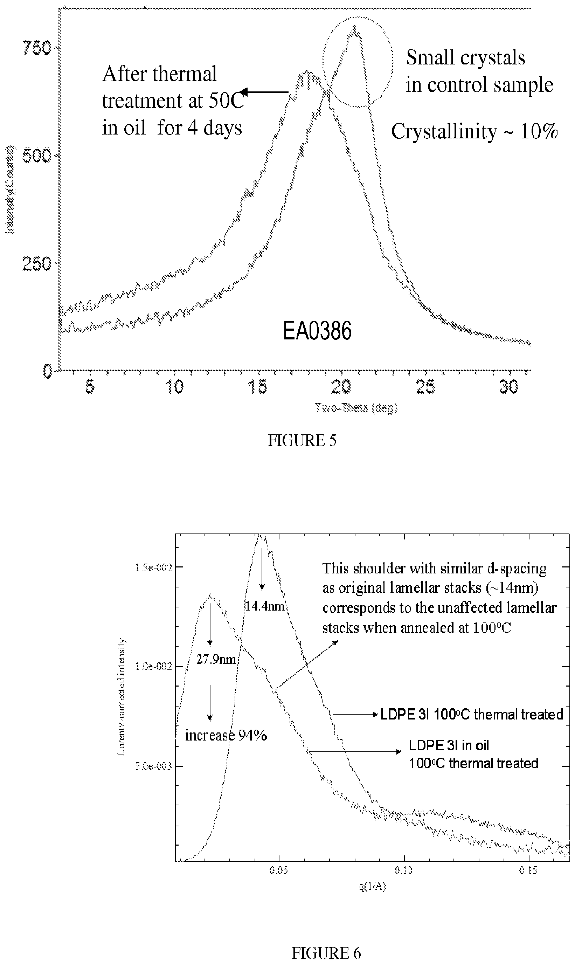

For example, in Figure 6, the scattering vector q = $4\pi\sin(\theta/2)/\lambda$, where $\lambda$ is the wavelength of the x-ray and $\theta$ is the scattering angle. The long period, L, or the center-to-center distance of the alternating crystalline and amorphous lamellar stacks, can be obtained with equation L= $2\pi/q^*$, where q* represents the peak maxima position in the figure.

Since the scattering peak shifts to a lower angle, as more oil get into the amorphous lamellae, and results in the increase in long period, the oil inclusion in LDPE can be evaluated by the "oil-induced percentage change in long period, P," defined by following equation:

$$P = \{\,(L_{oil} - L_{no-oil})/L_{no-oil}\,\} \times 100\,,$$

where $L_{oil}$ and $L_{no-oil}$ represent the long period of the control without oil, and the same polymer composition swollen by oil, respectively. It should be noted that both samples (with oil and without oil) should have same thermal history.

Method 2

In the second method (Method 2), the long period is determined by a correlation function, if a good alternating crystalline-amorphous packing exists, as determined by Small X-Ray Scattering angle data. A one dimensional correlation function ($\gamma(z)$) can be obtained from the SAXS data. The long period L, the average amorphous lamellar thickness $L_A$, and the average crystalline lamellar thickness $L_C$, are each determined from the one-dimensional correlation function $\gamma(z)$, which is obtained from the small angle X-ray raw data with the following Equation 2:

$$\gamma(z) = (1/\gamma(0))\int_0^\infty q^2[I(q) - I(q)_{b]}\cos(qz)dq \qquad \text{(Eqn. 2)},$$

where *z* is the correlation distance along the direction from which the electron density distribution is measured. The *q* value is defined above. The *I(q)* value is the scattering intensity. Since the experimentally accessible *q* range is finite, it was necessary to extend the data to both lower and higher *q* values. The *I(q)$_b$* value is the background scattering intensity. The "intensity versus *q*" data were linearly extrapolated from the smallest measured *q* value to zero. Large *q* values were damped to infinite *q* by using the Porod-Ruland theory [see References 2 and 3]. References: (1) Strobl, G. R.; Schneider, M. J. Polym. Sci., Polym. Phys. Ed. 1980, 18, 1343, (2) Small Angle X-ray Scattering; Glatter, O., Kratky, O., Eds.; Academic Press: London, 1983; and (3) Ruland, W. J. Appl. Crystallogr. 1971, 4, 70.

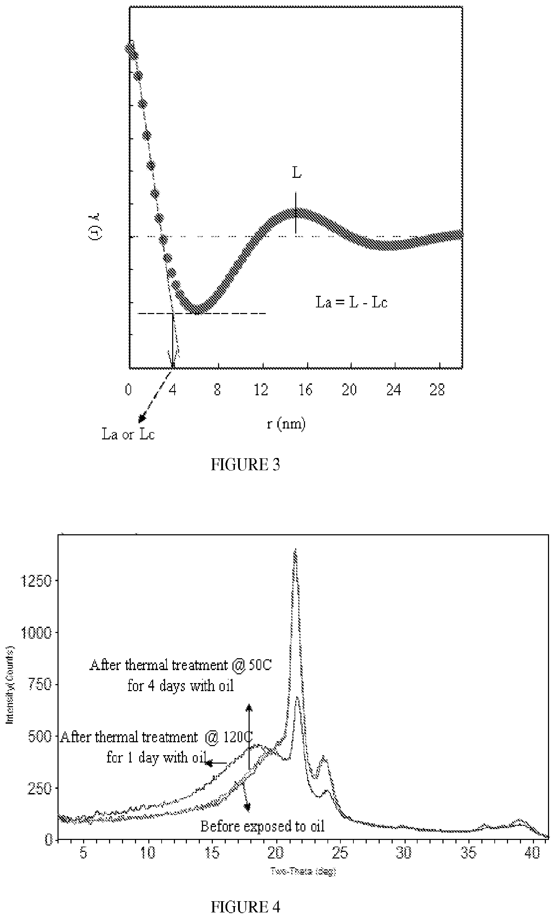

The calculation of the long period L, the average crystalline lamellar thickness $L_C$ and the average amorphous lamellar thickness $L_{CA}$ are illustrated in Figure 3, with a correlation function curve. The long period L is determined by the maximum position of first peak, and $L_A$ or $L_C$ is obtained from the position marked with an arrow. For a polymer with a crystallinity less than 50% (for example, determined by diffraction), like LDPE and the OBC studied in this work, $L_A$ is determined by the arrow position. For a polymer with a crystallinity greater than, or equal to, 50%, $L_C$ is determined by the arrow position. From the equation "L= $L_A$ + $L_C$," the other parameter, $L_A$ or $L_C$, can be derived. Therefore one dimensional crystallinity is defined by the ratio Lc/L. The amorphous degree = $1-L_C/L = L_A/L$.

The "percentage change in amorphous degree for a polymer composition with and without oil imbiding" is the R value, which can be evaluated with the following equation:

$$R = \{[L_A/(L_A + L_C)]_{OIL} \ - \ [L_A/(L_A + L_C)]_{NO\ OIL}\} \ / \ [L_A/(L_A + L_C)]_{NO\ OIL}\}*100 \ .$$

*Transmission Electron Microscopy (TEM)*

Polymer samples (pellets) were cut under cryogenic conditions, to produce a blockface for transmission electron microscopy sectioning. For TEM analysis, the blockface was cryo-polished, prior to staining, by removing sections at -120°C to prevent smearing of the elastomer phases. The cryo-polished blocks were stained with the vapor phase of an aqueous ruthenium tetraoxide solution, for three hours at ambient temperature. The staining solution was prepared by weighing 0.2 g of ruthenium (III) chloride hydrate ($RuCl_3.H_2O$) into a glass bottle with a screw lid, and adding 10 ml of 5.25 wt% aqueous sodium hypochlorite to the jar. The blocks were adhered to a glass microscope slide having double sided tape, in order to suspend the samples about 2.54 cm (one inch) above the staining solution. After staining, sections of approximately "100 nm in thickness" (5-10 mm$^2$ surface area) were collected at ambient temperature, using a diamond knife on a LEICA UCT/FCS microtome, and placed on 400 mesh virgin TEM grids for observation. A "JEOL JEM 1230 TEM" was operated at 100kV accelerating voltage to collect bright-field images, using GATAN 791 and GATAN 794 digital cameras. The TEM images were post processed using ADOBE PHOTOSHOP v9.

*Atomic Force Microscopy (AFM)*

Polymer samples (pellets or molded dices) were cut and trimmed with a razor blade to isolate the area of interest (approximate sample size 50 um x 100 um). The sample area was polished under cryogenic conditions using a LEICA UCT/FCS microtome, operated at - 140°C, to prevent smearing of the oil-containing elastomer phase. Sections with a thickness of 140 nm were cut, and placed on freshly cleaved mica surfaces for AFM analysis. Topography and phase images were captured, at ambient temperature, by using a Digital Instruments (now VEECO) Multi-Mode AFM equipped with a NanoScope IV controller. Nano-sensor probes with a spring constant 55 N/m and a resonant frequency in the vicinity of 167 kHz were used for phase imaging. The samples were imaged at a scan frequency of 0.5 Hz, with a free cantilever amplitude ($V_0$) of 3.0V, and a set point ratio ($r_{sp}$) of approximately 0.8.

*Differential Scanning Calorimetry (DSC)*

Differential Scanning Calorimetry (DSC) can be used to measure crystallinity in ethylene-based polymer (PE) and a propylene-based polymer (PP). About 5 to 8 mg of the polymer sample is weighed and placed in a DSC pan. The lid is crimped on the pan to ensure a closed atmosphere. The sample pan is placed in a DSC cell, and then heated, at a rate of approximately 10°C/min, to a temperature of 180°C for PE (230°C for PP). The sample is kept at this temperature for three minutes. Then the sample is cooled at a rate of 10°C/min to -60°C for PE (-40°C for PP), and kept isothermally at that temperature for three minutes. The sample is next heated at a rate of 10°C/min until complete melting (second heat). The percent crystallinity is calculated by dividing the heat of fusion ($H_f$), determined from the second heat curve, by a theoretical heat of fusion of 292 J/g for PE (165 J/g, for PP), and multiplying this quantity by 100 (for example, % cryst. = ($H_f$ / 292 J/g) x 100 (for PE)). The melting point(s) (Tm) of each polymer sample is determined from the second heat curve obtained from DSC, as described above. The crystallization temperature (Tc) is measured from the first cooling curve.

*Oil Exudation - Plastic Bag Test*

Oil exudation ranking were obtained using a plastic zipper storage bag. An injection-molded plaque (10.16cm x 15.24cm) ((4 inches x 6 inches)) was placed into a plastic zipper storage bag (approximately 17.78cm x 20.32cm (7 inches x 8 inches) in dimension), with the plaque surface in contact with the inner surface of the plastic bag, at room temperature. Most of the air was squeezed out of the bag by pressing the bag with the sample on a flat surface, and the zipper was pressed to lock the bag, with the plaque sample inside the bag. The oil exudation/bleeding was evaluated by examining the plaque/plastic bag interface. The rating of "0" meant no sign of any oil wetting, "10" meant complete wetting of surface due to oil bleed; other ranking values represented approximate degrees of oil bleed, with lower numbers indicating less oil bleed. The degree of wetting, a measure of the oil bleed, is a function of diffusion time and temperature.

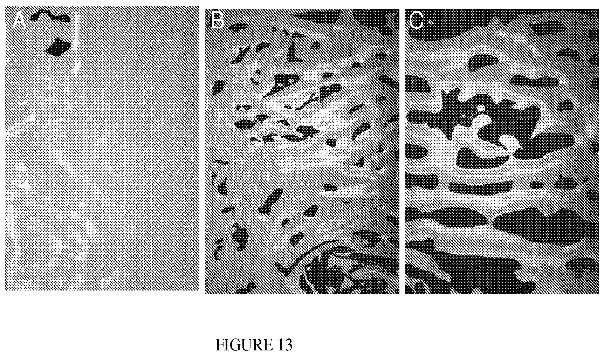

Figure 13 shows the optical images of the three plaque/bag interfaces. The oil-wet contact areas between the plaque and the bag were manually masked (in black) and rated. Figure 13A was given an oil-bleed rank of 0-1, Figure 13B was given an oil-bleed rank of 3-4, and Figure C was given an oil-bleed rank of 7-8.

The images shown in Figure 13 were also examined using a image processing software SPIP (Image Metrology, Denmark) that distinguishes and quantifies the color/shade of each pixel on the micrograph. An intensity (brightness) distribution histogram was generated by the software. The black pixels form a separated histogram peak which is integrated to give the area of the black pixels. Figure 13A had a black pixel percentage of less than 1%, Figure 13B had a black pixel percentage of about 16%, and Figure 13C has a black pixel percentage of about 38%.

*Tack Test*

The tack force was measured using a ChemInstruments EZ Lab, Compatible Loop Tack Tester (Model LT-1000). The test sample was an injection molded or compression molded bar "10.16cm x 15.24cm x 0.32cm (4 inch x 6 inch x 0.125 inch)". For each polymer composition, five bars were tested, and an average recorded.

The test bars were conditioned at 70°C for seven days, in a forced air convention oven, before being tested for tack. The test method was based on a modified version of ASTM D6195-03, "Standard Test Methods for Loop Tack" (Reference: 3 Annual Book of ASTM Standards, Vol 15.06.). For each test, a bar was placed in the lower brace of the loop tack tester. A strip of "127$\mu$m (5 mil) thick" MYLAR (2.54cm x 15.24cm (1 inch x 6 inch)) was cut, using a "2.54cm x 15.24cm (1 inch x 6 inch)" die. The end of the MYLAR strip was trimmed to form a "2.54cm x 12.7cm (1 inch x 5 inch)" strip. The MYLAR strip was folded into a loop, with the glossy side as the exterior side, and place in the top grip of the Loop Tack tester. The exterior surface of the loop was brought into controlled contact with a "2.54cm x 2.54cm (1 inch x 1 inch)" surface of test bar specimen, with the only force applied being the weight of the MYLAR strip itself. The MYLAR strip was then removed from the substrate, and the force to remove the MYLAR strip from the contacting surface was measured by a recording instrument.

*Gel Permeation Chromatography (GPC)*

Polymer molecular weight was characterized by high temperature, triple detector, Gel Permeation Chromatography (3D-GPC). The chromatographic system consisted of a Polymer Laboratories (Amherst, MA, now part of Varian, Inc, Shropshire, UK) "PL-GPC 210" high temperature chromatograph, equipped with a concentration detector (RI), a Precision Detectors (Amherst, MA) 2-angle laser light scattering detector, Model 2040, and a 4-capillary differential viscometer detector, Model 220, from VISCOTEK (Houston, TX). The 15° angle of the light scattering detector was used for calculation purposes.

Data collection was performed using VISCOTEK TriSEC software, version 3, and a 4-channel, VISCOTEK Data Manager DM400. The system was equipped with an on-line ERC-3415$\alpha$ four channel degasser system from ERC Inc (Tokyo, JP). The carousel compartment was operated at 150°C for polyethylene, and the column compartment was operated at 150°C. The columns were four Polymer Lab Mix-A 30 cm, 20 $\mu$m (micron) columns. The polymer solutions were prepared in 1,2,4-trichlorobenzene (TCB). The samples were prepared at a concentration of "0.1 grams of polymer" in "50 ml of TCB". The chromatographic solvent and the sample preparation solvent contained 200 ppm of butylated hydroxytoluene (BHT). Both solvent sources were nitrogen purged. The ethylene-based polymer samples were stirred gently at 160°C for four hours. The injection volume was 200 $\mu$l, and the flow rate was 1.0 ml/minute.

Calibration of the GPC column set was performed with 21 narrow molecular weight distribution polystyrene standards. The molecular weights of the standards ranged from 580 to 8,400,000, and were arranged in six "cocktail" mixtures, with at least a decade of separation between individual molecular weights. The polystyrene standard peak molecular weights were converted to polyethylene molecular weights using the following equation (as described in Williams and Ward, J. Polym. Sci., Polym. Let., 6, 621 (1968)):

$$\text{Mpolyethylene} = A \times (\text{Mpolystyrene})^{B} \quad (1A),$$

where M is the molecular weight, A has a value of 0.39 and B has a value of 1.0. A fourth order polynomial was used to fit the respective polyethylene-equivalent calibration points.

The total plate count of the GPC column set was performed with EICOSANE (prepared at 0.04 g in 50 milliliters of TCB, and dissolved for 20 minutes with gentle agitation). The plate count and symmetry were measured on a 200 microliter injection according to the following equations:

$$\text{PlateCount} = 5.54 * (\text{RV at Peak Maximum} / (\text{Peak width at } \tfrac{1}{2} \text{ height}))^{\wedge} 2 \quad (2A),$$

where RV is the retention volume in milliliters, and the peak width is in milliliters.

$$\text{Symmetry} = (\text{Rear peak width at one tenth height - RV at Peak maximum}) / (\text{RV at}$$

$$\text{Peak Maximum - Front peak width at one tenth height}) \quad (3A),$$

where RV is the retention volume in milliliters, and the peak width is in milliliters.

The Systematic Approach for the determination of multi-detector offsets was done in a manner consistent with that published by Balke, Mourey, et. Al (Mourey and Balke, Chromatography Polym. Chpt. 12, (1992)) (Balke, Thitiratsakul, Lew, Cheung, Mourey, Chromatography Polym. Chpt. 13, (1992)). Optimizing dual detector, log molecular weight results, from a broad polyethylene of 115,000, to the narrow standard column calibration results, from the narrow standards calibration curve, using in-house software. The molecular weight data for off-set determination was obtained in a manner consistent with that published by Zimm (Zimm, B.H., J.Chem. Phys., 16, 1099 (1948)) and Kratochvil (Kratochvil, P., Classical Light Scattering from Polymer Solutions, Elsevier, Oxford, NY (1987)). The overall injected concentration, used for the determination of the molecular weight, was obtained from the sample refractive index, increment area, and the RI detector calibration from a linear polyethylene homopolymer of 115,000 Dalton molecular weight. The refractive index increment (dn/dc) for polyethylene is -0.104 mL/g. The chromatographic concentrations were assumed low enough to eliminate addressing 2nd Virial coefficient effects (concentration effects on molecular weight).

The calculations of Mn, Mw, and Mz based on GPC (conventional GPC for Mn, Mw and Mz) results, using the RI detector were determined from the following equations:

$$\overline{Mn} = \frac{\sum\limits_{i}^{i} RI_{i}}{\sum\limits_{i} \left( RI_{i} \Big/ M_{calibration_{i}} \right)} \quad (4A),$$

$$\overline{Mw} = \frac{\sum\limits_{i}^{i} \left( RI_{i} * Mcal_{i} \right)}{\sum\limits_{i} RI_{i}} \quad (5A),$$

$$\overline{Mz} = \frac{\sum\limits_{i}^{i} \left( RI_{i} * Mcal^{2}_{i} \right)}{\sum\limits_{i} \left( RI_{i} * Mcal_{i} \right)} \quad (6A).$$

Another form of molecular weight average is the viscosity average (average Mv) which can be calculated using Equation 7A:

$$\overline{Mz} = \left( \frac{\sum_i^{i} \left( RI_i * Mcal_i^{\alpha+1} \right)}{\sum_i^{i} \left( RI_i \right)} \right)^{1/\alpha}$$ (7A),

where $\alpha$ is a material dependent parameter which relates the intrinsic viscosity ($[\eta]$) to the molecular weight of the polymer.

In addition to the above calculations, a set of alternative values [Mw(abs), Mz(abs), Mz(BB) and Mz+1(BB)] values were also calculated with the method proposed by Yau and Gillespie, Polymer, 42, 8947-8958 (2001), and determined from the following equations:

$$\overline{Mw}(abs) = K_{LS} * \frac{\sum_i^{i} \left( LS_i \right)}{\sum_i^{i} \left( IR_i \right)}$$ (8A),

where, KLS = LS - MW calibration constant,

$$\overline{Mz}(abs) = \frac{\sum_i^{i} RI_i * \left( LS_i / RI_i \right)^2}{\sum_i^{i} RI_i * \left( LS_i / RI_i \right)}$$ (9A),

$$\overline{Mz}(BB) = \frac{\sum_i^{i} \left( LS_i * Mcalibration_i \right)}{\sum_i^{i} \left( LS_i \right)}$$ (10A),

$$\overline{M_{z+1}}(BB) = \frac{\sum_i^{i} \left( LS_i * Mcalibration_i^2 \right)}{\sum_i^{i} \left( LS_i * Mcalibration_i \right)}$$ (11A),

where $LS_i$ is the 15 degree LS signal, and the Mcalibration uses equation 1A, and the LS detector alignment is as described previously.

EXPERIMENTAL

**Polymers and Additives**

The following polymers were studied, as shown in Table 1 below. Each polymer was blended with one or more stabilizers, present in low (ppm) amounts, and is available from The Dow Chemical Company.

Table 1: Polymers

| Polymer* | Type | Density | MI** | Tm |
|---|---|---|---|---|
| EAO100 | Ethylene/Octene-1 Copolymer | 0.870 | 1.0 | 60 |
| EAO386 | Ethylene/Propylene Copolymer | 0.875 | < 0.5 | 55 |
| OBC07 | Ethylene/Octene-1 Multiblock Copolymer | 0.866 | 0.5 | 119 |

(continued)

| Polymer* | Type | Density | MI** | Tm |
|----------|------|---------|------|-----|
| LDPE 2I | LDPE | 0.919 | 0.47 | 108 |
| LDPE 3I | LDPE | 0.923 | 25 | 110 |
| LDPE 5I | LDPE | 0.928 | 1.9 | 114 |
| LDPE 0I | LDPE | 0.922 | 2 | 112 |
| LDPE 05 | LDPE | 0.918 | 5.5 | 108 |
| LDPE 94 | LDPE | 0.922 | 0.8 | 112 |
| HDPE 92 | HDPE | 0.949 | 0.06 | n/a |
| * EAO polymers are homogeneously branched substantially linear copolymers. **Melt index (MI) is measured at 190°C, 2.16 kg. | | | | |

HYDROBRITE 550 is a white mineral oil with about 70 wt% paraffinic and 30 wt% naphthenic content, and a density of 0.870 g/cc (available from Sonneborn Inc.).

PARALUX 6001 is a process oil with about 70 wt% paraffinic and 30 wt% naphthenic content, and a density of 0.872 g/cc (available from Chevron Phillips Chemical Company LLC.).

DAPLOY WB 130HMS is a high melt strength grade of polypropylene from Borealis.

MB50-002 is a siloxane masterbatch containing 50% of an ultra-high molecular weight siloxane polymer dispersed in polyethylene (LDPE) homopolymer (available from Dow Corning Corporation.)

Molecular weight data for the LDPE polymers in Table 1 are shown below in Table 2.

Table 2: GPC Molecular Weight (g/mole) Data of Low Density Polyethylenes

| | Mn (Conv.) | Mw (Conv.) | Mz (Conv.) | Mw/Mn (Conv.) | Mn (Abs.) | Mw (Abs.) | Mz(BB) | Mz(abs) (Abs.) | Mz(Abs.)/Mz (Conv.) |
|---|---|---|---|---|---|---|---|---|---|
| LDPE 94 | 10120 | 89960 | 388200 | 8.89 | 5358 | 135310 | 177100 | 984900 | 2.54 |
| LDPE 5I | 3380 | 79600 | 321500 | 23.5 | 1251 | 127330 | 167800 | 1006000 | 3.13 |
| LDPE 0I | 10190 | 79280 | 250900 | 7.78 | 7001 | 126100 | 144200 | 732100 | 2.92 |
| LDPE 05 | 3620 | 154480 | 757100 | 42.7 | 1339 | 416570 | 371500 | 3536600 | 4.67 |
| LDPE 3I | 4200 | 81700 | 510000 | 19.4 | 2260 | 220820 | 163000 | 6084900 | 11.9 |
| LDPE 2I | 19970 | 236960 | 865900 | 11.87 | 23,606 | 610520 | 610520 | 3095700 | 3.6 |

**Preparation of Polymer Formulations**

*Batch Mixer and Compression Molding*

Polymer formulations were prepared in a HAAKE RHEOMIX 3000E mixer, at 190°C, with roller style blades, at 40-60 rpm rotor speed. The mixing bowl was charged with polymer and other components. If oil was added to the formulation, the oil was slowly added to the molten polymer formulation to avoid slippage. Once polymer and all components were loaded, and good kneading was established, the mixing was continued for five additional minutes. The rotors were then stopped, the mixer disassembled, and the final polymer formulation was collected on MYLAR sheets, cold pressed into a "pancake" for further molding later, and cooled to room temperature.

The formulations were compression molded on a CARVER press, with a thickness of about 762 $\mu$m (30 mils). The sample was sandwiched between two sheets of MYLAR or TEFLON, which were placed between metal plates resting on a tray holder. Samples were molded at 190°C, for 3 minutes, at 280 MPa (40,000 psi). Sheet samples were removed, and placed between cold platens (cooled by circulating tap water) for 3 minutes, at 280 MPa (40,000 psi). Several discs of "2.54cm (one inch)" diameter (about 762 $\mu$m (30 mils) in thickness) were cut from the compression molded sheet.

*Extrusion Compounding and Injection Molding*

The oil-containing formulations were made using a Werner & Pfleiderer 30 mm "ZSK-30" twin-screw extruder. The resin pellets were dry-blended first, and then fed into the extruder using a "loss-in-weight" feeder. The oil was fed, via oil-injection ports, using a gear pump. The typical polymer melt temperature was kept at 152°C. Typical extruder zone temperature profiles were: zones #1/2/3/4/5/6/7/die = 140/190/190/203/190/190/190/180°C. The resin was pelletized with an underwater pelletizer.

Plaques (10.16cm x 15.24cm x 0.32cm (4 inch x 6 inch x 0.125 inch)) were injection molded (from the dried pellets prepared above) on an ARBURG 370C- 81,284kg (80 ton) injection molder using a 121/177/204/204/204°C (250/350/400/400/400°F) (for zones 1 through 5) temperature profile and 18°C (65°F) mold temperature. Mold hold time was 30 seconds, followed by a 20 seconds cooling time.

**Preparation of Oil-Imbibed Polymer Samples**

The compression molded discs (2.54cm (1-inch)), about 762 $\mu$m (30 mil) in thickness) or polymer pellets (for example, LDPE, HDPE, OBC, etc.) were each immersed in mineral oil (for example, PARALUX 6001R, or HYDROBRITE 550) in a wide-mouthed glass jar. The jar was placed in oven at set temperatures for specified time periods. The oil-immersed samples were then cooled to room temperature, and taken out of the glass jar. The oil on the sample surface was removed using KIMWIPES tissues (from Kimberly-Clark Corporation). The oil content in the oil-imbibed samples was determined by at least one of the two methods described below.

a) Gravimetric Method to Determine Oil Content

The compression molded disc (762$\mu$m (30 mil) thickness, 2.54cm (1-inch) in diameter) was weighed with an analytical balance before immersing it into the oil. After immersing the disc in the oil at specified temperature and time, the disc was removed from the oil. Excess oil was removed using KIMWIPES tissue (form Kimberly-Clark). The oil-containing disc was weighed with an analytical balance and the weight was recorded. The oil content was calculated as follows: oil content (wt%) = [(weight of (oil + polymer)) - weight (polymer)]/weight (polymer) *100.

b) Wide Angle X-Ray Method to Determine Oil Content

Wide Angle X-ray Diffraction (WAXD) can also be used to estimate how much oil is contained in the swollen semicrystalline polymer. For example, as shown in Figure 4, there is only small change between LDPE 2I control and LDPE 2I sample thermally treated in oil at 50°C. This result suggests that not that much oil is present in the amorphous regions of the polymer. However, after thermally treating in oil at 120°C, there is large decrease in crystallinity of the oil-imbibed LDPE, evidenced by the decrease in diffraction peaks. Based on the X-ray diffraction data, the crystallinity of the LDPE control is 34 wt%, based on the total area of the x-ray profile, and the crystallinity of the "120°C treated sample" is 17 wt%, based on the total area of the x-ray profile. Therefore, the oil content in the material is about 50 wt% ((34 wt% - 17 wt%)/34 wt%), assuming there is no significant change in the crystallinity of LDPE upon thermal treatment.

**LDPE/Oil** - **Long Period Determination**

Table 3 lists the Long Period obtained from Lorentz-corrected SAXS Profiles of Different LDPE Samples.

Table 3: Long Period Obtained from Lorentz-Corrected SAXS Profiles of Different LDPE

| Sample | Polymer | Description/Treatment | L (nm) | P (%) * |
|--------|---------|----------------------|--------|---------|
| LCE-1 | LDPE 3I | Control, no oil at 100°C for 1 day | 14.4 | na |
| LCE-2 | LDPE 31 | Immersed in oil at 100C for 1 day | 27.9 | 94 |

(continued)

| Sample | Polymer | Description/Treatment | L (nm) | P (%) * |
|--------|---------|----------------------|--------|---------|
| LCE-3 | LDPE 51 | Control, no oil at 100°C for 1 day | 15.1 | na |
| LCE-4 | LDPE 51 | Immersed in oil at 100°C for 1 day | 32.0 | 112 |
| LCE-5 | LDPE 0I | Control, no oil at 100°C for 1 day | 14.3 | na |
| LCE-6 | LDPE 0I | Immersed in oil at 100°C for 1 day | NA (peak beyond instrument test limit) | Even larger, (beyond instrument test limit) |

*

$$P = \{ (L_{oil} - L_{no-oil}) / L_{no-oil} \} \times 100$$

NA= not applicable

It can be seen from Table 3 that the increase in long period (L) can be as high as 112%. High amounts of absorbed oil eventually lead to the absence of the scattering peak from Lorentz-corrected SAXS profile, indicating destruction of lamellar packing, due to the effect of significant amount of oil in the polymer.

**Comparison of Several Oil-Treated Semicrystalline Polymers**

Table 4 below lists the "Percent Change in Amorphous Degree" for several semicrystalline polymers. The control polymers were analyzed as received.

In general, when a semicrystalline polymer is thermally treated at high temperature, the crystallinity will increase slightly due to secondary crystallization, and the amorphous degree will decrease slightly. When a semicrystalline polymer is treated in oil at high temperature, if there is no oil inclusion, it is expected that amorphous degree will decrease, as seen in Table 4 below for HDPE and OBC. In contrast, it was discovered that for the LDPE sample (IE2-1), which was immersed in oil at 120°C, for one day, there is a increase (11%) in relative amorphous degree (or R). This indicates that at least an "11 vol%" amount of oil was contained in the amorphous region of the LDPE lamellae.

An R value of 11.4% for LDPE, means that the amorphous degree of the oil treated LDPE increased at least by 11.4%.

Table 4: Percent Change in Amorphous Degree*

| Sample | Polymer | Description/Treatment | L (nm) | $L_C$ (nm) | $L_A$ (nm) | $L_A/L$* | R(%)** |
|--------|---------|----------------------|--------|-----------|-----------|---------|--------|
| CE2-1 | LDPE 21 | Control for IE2-1 | 11.2 | 3.8 | 7.4 | 0.661 | na |
| IE2-1 | LDPE 2I | Immersed in oil at 120C for 1 day | 21.2 | 5.6 | 15.6 | 0.736 | 11.4 |
| CE2-2 | HDPE 92 | Control for CE2-3 | 19.1 | 13.4 | 5.7 | 0.298 | na |
| CE2-3 | HDPE 92 | Immersed in oil at 120C for 1 day | 33.4 | 23.9 | 9.5 | 0.284 | -4.7 |
| CE2-4 | OBC D90 | Control for CE2-5 | 21.8 | 6.3 | 15.5 | 0.711 | na |
| CE2-5 | OBC D90 | Immersed in oil at 50C for 4 days | 21.4 | 6.4 | 15 | 0.701 | -1.4 |

* Amorphous degree: $A = L_A/(L_A + L_C)$.

** Percent change in amorphous degree:

$$R = \{[[L_A/(L_A + L_C)]_{OIL} - [L_A/(L_A + L_C)]_{NO\ OIL}] / [L_A/(L_A + L_C)]_{NO\ OIL}\} \times 100.$$

**The Effect of Oil on EAO386**

EAO386 has a relatively low crystallinity (~10%) and a fringe-micelle crystalline morphology (and low melting point of around 60°C). After thermal treatment at 50°C for four days, in oil, the swollen EAO386 contained about 85 wt% of oil (evaluated by Gravimetric Method). The oil treatment destroyed the crystallinity of the polymer, as shown in Figure 5, generated from Wide Angle X-ray Diffraction (WAXD). As shown in Figure 5, after the polymer was thermally treatment at 50°C, and cool to room temperature, the diffraction peak around 21 degrees (crystalline) is no long present, and the polymer becomes completely amorphous.

In contrast to EAO386, it was discovered that the LDPE samples formed thin, crystalline lamellae, upon oil treatment under the same conditions. Even though the oil treatment reduced or even destroyed the long-range ordering of the crystal lamellae in LDPE samples, the thin, crystal lamellae can still serve as physical barrier to oil migration, and can retard oil bleed out. No crystal lamellae exist in oil-treated EAO386, and thus this polymer can not retard or stop oil bleed as effectively as the LDPE samples.

**Microscopy - LDPE plus Oil**

*Small Angle X-Ray Scattering (SAXS) and TEM Data*

Figure 6 depicts the SAXS profiles of LDPE 3I without oil, and after thermal treatment in oil at 100°C. The sample (pellets) without oil was thermally treated at 100°C for two days. The sample with oil was prepared by immersing a compression molded disc in oil, and maintaining the oil at 100°C for two days. The disc was then removed from the oil, and the excess oil was removed using KIMWIPE tissues. The disc was cooled to room temperature before x-ray analysis. The data was collected at room temperature.

As shown in Figure 6, a SAXS peak still exists after oil swelling of LDPE 3I, at 100°C, for two days. The "long period" ($L_A + L_C$) increased significantly (from 14.4 to 27.9 nm, which indicates a significant amount of oil in the lamellar stacks.

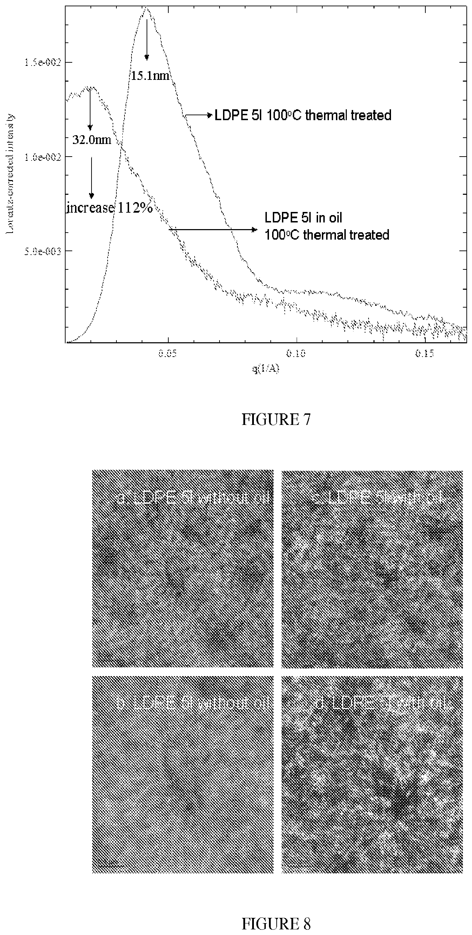

Figure 7 depicts the SAXS profiles of LDPE 5I without oil, and with oil (compression molded disc) after thermal treatment at 100°C, for two days. The sample (pellets) without oil was thermally treated at 100°C for two days. As shown in Figure 7, the severely swollen lamellae led to a shift in the SAXS peak (peak also not as well defined). Figure 8 depicts TEM images of the above LDPE 5I. Data was collected at room temperature. The spherulites swell significantly by oil, which can be seen directly from the TEM images, as shown in Figure 8. The crystalline regions (spherulitic level) are seen to be distributed, with a high degree of uniformity throughout the micrograph. Similarly, no grossly, phases-separated, oil rich amorphous regions (dark domains), larger than about 300 nm in diameter, are observed, indicating the oil distribution within the polymer matrix is highly uniform.

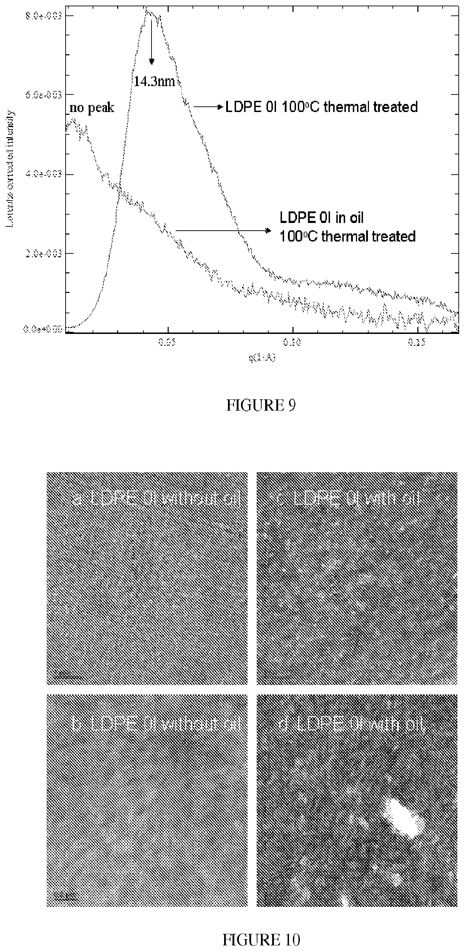

With some of the LDPE polymers, crystal lamellae are highly exfoliated by oil. The long-range ordering of lamellar stacks are diminished, or vanished, depending on the extent of the exfoliation of the crystalline lamellae. The break-down in long-range ordering of the exfoliated crystalline lamellae, as shown in SAXS, is exemplified in Figure 9 for LDPE 0I. Figure 9 depicts SAXS scattering profiles of LDPE 0I without oil, and with oil (compression molded disc) after thermal treatment in oil at 100°C, for two days. The sample (pellets) without oil was thermally treated at 100°C for two days. Data was collected at room temperature. It is seen from the SAXS profile, that a scattering peak is not apparent, due to the severe reduction in the long range ordering of the lamellar stacks, and even the scattering intensity is very weak, compared to the control sample without the oil. This indicates that the intercalation and exfoliation, both "break up or interrupt" significantly the long-rang ordering of the lamellar stacks. TEM images of oil-swollen LDPE 0I and its control are shown in Figure 10. The super crystalline spherulitic structure no longer exists in this oil swollen sample.

*AFM (Atomic Force Microscopy)*

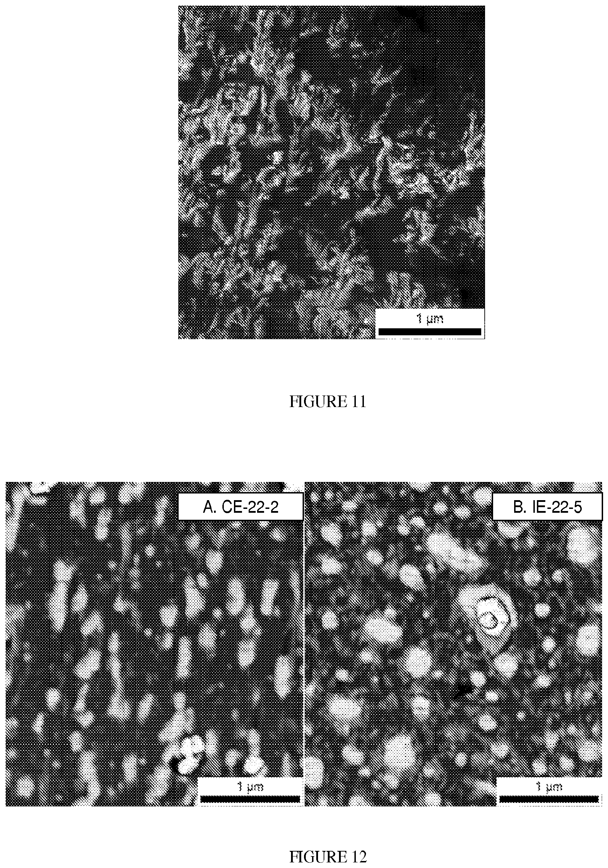

Figure 11 depicts the AFM images of LDPE 0I with oil. The oil-containing sample was prepared by immersing polymer pellets in oil, and thermally treating at 100°C, for two days. The AFM images indicate that the crystalline lamellae of the oil-containing LDPE 0I sample are exfoliated in the oil. As shown in Figure 11, the oil-swollen LDPE 0I retains substantial crystallinity, although no distinctive long-range ordering of lamellar stacks were detected via SAXS and TEM. The crystalline lamellae are exfoliated into thin platelets, highly dispersed without preferential, orientation or long-range ordering in the oil/amorphous polymer matrix. It is believed that this morphology is conducive for retaining oil, with reduced, or eliminated, oil bleed-out, because the thin, highly dispersed crystalline lamellae may function as barriers to prohibit, or reduce substantially, the rate and tendency for oil bleed.

**PE/LDPE/Oil Formulations**

*OBC/LDPE/Oil*

Some OBC/LDPE/mineral oil formulations are shown below in Table 5. Samples were prepared by compounding through a twin-screw extruder, followed by injection molding into a plaque or bar (10.16cm x 15.24cm x 0.32cm) (4 in x 6 in x 0.125 in)), as discussed above.

The injection molded plaques were placed in a forced air convention oven maintained at 70°C for seven days. After this time, each plaque was removed from the oven, cooled to room temperature and immediately tested for tack force. The results are shown in Table 5 below.

Table 5: OBC/LDPE/Mineral Oil Formulations (amounts in weight percent)

| Sample | IE B1 (Inventive) | CE B1 (Comparative) | CE B2 (Comparative) |
|---|---|---|---|
| OBC 07 | 36.4 | 22 | 32 |
| HYDROBRITE 550 oil | 54.5 | 33 | 48 |
| PP H110-02N | 0 | 0 | 15 |
| ATOMITE CaCO3 | 0 | 45 | 5 |
| LDPE 2I | 9.1 | 0 | 0 |
| Oil/OBC ratio | 1.5 | 1.5 | 1.5 |
| | | | |
| Average Maximum Tack Force (N)* | 0.656 | 1.914 | 1.332 |
| Standard Deviation (n=5) | 0.184 | 0.343 | 0.359 |

At a similar oil to elastomer (OBC 07) weight ratio, the sample IE B1 exhibited a significantly lower tack force, as compared to the comparative samples CE B1 and CE B2. Since tack force is a reflection of oil exudation to the surface, IE B1 had significantly lower oil bleed compared to CE B1 and CE B2. Although IE B1 had the highest oil content, it had the lowest oil bleed, which is an unexpected, but very desirable feature for many applications where oil bleed is not desirable or unacceptable.

*EAO/LDPE//Oil*

Two additional elastomeric formulations are shown below in Table 6.

Table 6: Additional Elastomeric Formulations (amounts weight percent)

| | CE 22-2 (Comp. Ex.)) | IE 22-5 (Inv. Ex.) |
|---|---|---|
| EAO386 | 14.4 | |
| EAO100 | 28.7 | 28.7 |
| LDPE 2I | | 14.4 |
| DAPLOY Wb130HMS (PP) | 14.4 | 14.4 |
| CaCO3 | 20 | 20 |
| PARALUX 6001R | 20 | 20 |
| MB50-002 | 0.5 | 0.5 |
| TiO2 | 2 | 2 |
| Total Wt | 100.0 | 100.0 |

Samples were prepared by compounding through a twin screw extruder, followed by injection molding into plaques (10.16cm x 15.24 x 0.32cm) ((4 in x 6 in x 0.125 in)), as discussed above. The AFM micrographs of the elastomer formulations of Table 6 are shown in Figure 12. As shown in Figure 12, the crystalline lamellae of LDPE in the IE 22-5 are highly dispersed, without preferential orientation or long-range ordering in the matrix. As discussed, this inventive example was prepared by compounding through a twin-screw extruder, followed by injection molding. This mode of sample preparation, by subjecting the polymeric compound admixture to intensive shearing mixing, via twin-screw extruder compounding, is conductive to obtaining the desired highly dispersed, crystalline lamellae morphology of the LDPE. This preparation method is a preferred mode of sample preparation, as compared to a batch process, such as in a HAAKE mixer.

After injection molding, the plaques were immediately placed into plastic zipper storage bags, and the excess air was squeezed by hand and the bag zip closed. The sample were kept at room temperature for specified periods of time, and examined visually for the appearance and extent of oil bleed, using the "plastic bag" method described above. The results are shown in Table 7.

Table 7: Visual Rating of Surface Oil Exudation of Samples

| Time after sample bars were in bags | CE 22-2 | IE 22-5 |
| --- | --- | --- |
| 121 Day | 5 | 1 |
| 161 Day | 9 | 0 |
| 254 Day | 9 | 0 |
| 357 Day | 9 | 0 |

As shown in Table 7, sample IE 22-5 exhibited significantly lower extent of oil exudation, as compared to sample CE 22-2. Even after 357 days, no appearance of an oil-wetted interface was observed in IE 22-5.

As discussed above, the AFM micrographs of CE 22-2 and IE 22-5 are shown in Figure 12. Figure 12A represents sample CE 22-2, and Figure 12B represents sample IE 22-5. The very bright spots/domains are attributed to the PP component and/or inorganic filler particles. As shown in Figure 12B, the micrograph of IE 22-5 reveals thin crystalline lamellae dispersed throughout the compound matrix. These dispersed lamellae form an effective web of barriers for oil diffusion. In contrast, as shown in Figure 12A, the micrograph of CE 22-2, shows no finely dispersed thin crystalline lamellae in the compound matrix, and thus no effective barrier to oil diffusion. As shown above, sample CE 22-2 exhibited a fast oil bleed out.

Although the invention has been described in considerable detail in the preceding examples, this detail is for the purpose of illustration, and is not to be construed as a limitation on the invention as described in the following claims.

**Claims**

1. A composition comprising a first composition that comprises an ethylene-based polymer and an oil, wherein the first composition has the following property as determined by Small Angle X-Ray Scattering: $(L_{oil} - L_{no\text{-}oil})/L_{no\text{-}oil} > 10\%$, where $L_{oil}$ is the long period of the polymer with oil, and $L_{no\text{-}oil}$ is the long period of the polymer without oil, and wherein the ethylene-based polymer is a low density polyethylene (LDPE) with a molecular weight distribution (Mw(conv)/Mn(conv) of greater than or equal to 7.

2. The composition of Claim 1, wherein the first composition has the following property as determined by small angle x-ray scattering: $[[L_A/L_A + L_C)]_{OIL} - [LA/(L_A + L_C)]_{NO\ OIL}]/[L_A/L_A + L_C)]_{NO\ OIL} \geq 7\%$, where $L_A$ is the average amorphous lamellar thickness, and $L_c$ is the average crystalline lamellar thickness.

3. The composition of any of the previous claims, wherein the ethylene-based polymer has a molecular weight ratio, Mz(abs)/Mz(conv) greater than 2.2 as determined by GPC.

4. The composition of any of the previous claims, wherein the ethylene-based has a MR value less than 200 g/10 min, where MR = 12 x RR where M is the melt index in g/10 min as measured in accordance with ASTM D-1238-04, condition 190°C/2.16 kg and R is the rheology ratio (RR) or V0-1/V100, where V0.1 is the melt viscosity of polymer at 190°C, measured at a shear rate of 0.1 rad/sec, and V100 is the melt viscosity of polymer at 190°C, measured at a shear rate of 100 rad/sec, wherein melt viscosities are measured under a nitrogen atmosphere, using a dynamic mechanical spectrometer, under a dynamic sweep made from 0.1 to 100 rad/sec..

5. The composition of any of the previous claims, wherein the ethylene-based polymer has a number average molecular weight (Mn(conv)) greater than 2800 g/mole, as determined by GPC.

6. The composition of any of the previous claims, wherein the ethylene-based polymer has a density from 0.900 to 0.940 g/cc as measured in accordance with ASTM D-792-08.

7. The composition of any of the previous claims, wherein the ethylene-based polymer has melt index (I2) from 0.2 to 50 g/10 min as measured in accordance with ASTM D-1238-04, condition 190°C/2.16 kg.

8. The composition of any of the previous claims, wherein the ethylene-based polymer has a melting temperature greater than, or equal to, 100°C.

9. The composition of any of the previous claims, wherein the ethylene-based polymer is present in an amount from 2 to 50 weight percent, based on the weight of the composition.

10. The composition of any of the previous claims, wherein the oil is present in an amount from 10 to 70 weight percent, based on the weight of the composition.

11. The composition of any of the previous claims, wherein the oil is present in an amount from 35 to 90 weight percent, based on the sum weight of the ethylene-based polymer and the oil.

12. The composition of any of the previous claims, further comprising an olefin-based polymer selected from the group consisting of a propylene-based polymer, an olefin multi-block interpolymer, an olefin multi-block copolymer, a homogeneously branched linear interpolymer, a homogeneously branched linear copolymer, a homogeneous branched substantially linear interpolymer and a homogeneous branched substantially linear copolymer.

**Patentansprüche**

1. Eine Zusammensetzung, die eine erste Zusammensetzung beinhaltet, die ein Polymer auf Ethylenbasis und ein Öl beinhaltet,
wobei die erste Zusammensetzung die folgende Eigenschaft aufweist, wie mittels Kleinwinkelröntgenstreuung bestimmt: $(L_{\text{Öl}} - L_{\text{kein Öl}}) / L_{\text{kein Öl}} > 10$ %,
wobei $L_{\text{Öl}}$ die Langperiode des Polymers mit Öl ist und
$L_{\text{kein Öl}}$ die Langperiode des Polymers ohne Öl ist
und wobei das Polymer auf Ethylenbasis ein Polyethylen niedriger Dichte (LDPE) mit einer Molekulargewichtsverteilung (Mw(conv)/Mn(conv)) von größer als oder gleich 7 ist.

2. Zusammensetzung gemäß Anspruch 1, wobei die erste Zusammensetzung die folgende Eigenschaft aufweist, wie mittels Kleinwinkelröntgenstreuung bestimmt: $[[L_A/L_A + L_C)]_{\text{ÖL}} - [L_A/(L_A + L_C)]_{\text{KEIN ÖL}}]/[L_A/L_A + L_C)]_{\text{KEIN ÖL}} \geq 7$ %,
wobei $L_A$ die durchschnittliche amorphe lamellare Dicke ist und $L_C$ die durchschnittliche kristalline lamellare Dicke ist.

3. Zusammensetzung gemäß einem der vorhergehenden Ansprüche, wobei das Polymer auf Ethylenbasis ein Molekulargewichtsverhältnis Mz(abs)/Mz(conv) von größer als 2,2, wie mittels GPC bestimmt, aufweist.

4. Zusammensetzung gemäß einem der vorhergehenden Ansprüche, wobei das Polymer auf Ethylenbasis einen MR-Wert von weniger als 200 g/10 min aufweist, wobei MR = 12 x RR, wobei M der Schmelzindex in g/10 min, wie gemäß ASTM D-1238-04, Bedingung 190 °C/2,16 kg, gemessen, ist und R das Rheologieverhältnis (RR) oder V0-1/V100 ist, wobei V0.1 die Schmelzviskosität von Polymer bei 190 °C, gemessen bei einer Scherrate von 0,1 rad/s, ist und V100 die Schmelzviskosität von Polymer bei 190 °C, gemessen bei einer Scherrate von 100 rad/s, ist, wobei Schmelzviskositäten unter einer Stickstoffatmosphäre unter Verwendung eines dynamischen mechanischen Spektrometers unter einem dynamischen Sweep von 0,1 auf 100 rad/s gemessen werden.

5. Zusammensetzung gemäß einem der vorhergehenden Ansprüche, wobei das Polymer auf Ethylenbasis ein zahlengemitteltes Molekulargewicht (Mn(conv)) von größer als 2 800 g/mol, wie mittels GPC bestimmt, aufweist.

6. Zusammensetzung gemäß einem der vorhergehenden Ansprüche, wobei das Polymer auf Ethylenbasis eine Dichte von 0,900 bis 0,940 g/cm$^3$, wie gemäß ASTM D-792-08 gemessen, aufweist.

7. Zusammensetzung gemäß einem der vorhergehenden Ansprüche, wobei das Polymer auf Ethylenbasis einen Schmelzindex (I2) von 0,2 bis 50 g/10 min, wie gemäß ASTM D-1238-04, Bedingung 190 °C/2,16 kg, gemessen, aufweist.

8. Zusammensetzung gemäß einem der vorhergehenden Ansprüche, wobei das Polymer auf Ethylenbasis eine Schmelztemperatur von größer als oder gleich 100 °C aufweist.

9. Zusammensetzung gemäß einem der vorhergehenden Ansprüche, wobei das Polymer auf Ethylenbasis in einer Menge von 2 bis 50 Gewichtsprozent, bezogen auf das Gewicht der Zusammensetzung, vorliegt.

**10.** Zusammensetzung gemäß einem der vorhergehenden Ansprüche, wobei das Öl in einer Menge von 10 bis 70 Gewichtsprozent, bezogen auf das Gewicht der Zusammensetzung, vorliegt.

**11.** Zusammensetzung gemäß einem der vorhergehenden Ansprüche, wobei das Öl in einer Menge von 35 bis 90 Gewichtsprozent, bezogen auf das Summengewicht des Polymers auf Ethylenbasis und des Öls, vorliegt.

**12.** Zusammensetzung gemäß einem der vorhergehenden Ansprüche, ferner beinhaltend ein Polymer auf Olefinbasis, das aus der Gruppe ausgewählt ist, die aus Folgendem besteht: einem Polymer auf Propylenbasis, einem Olefin-Multiblock-Interpolymer, einem Olefin-Multiblock-Copolymer, einem homogen verzweigten linearen Interpolymer, einem homogen verzweigten linearen Copolymer, einem homogenen verzweigten, im Wesentlichen linearen Interpolymer und einem homogenen verzweigten, im Wesentlichen linearen Copolymer.

## Revendications

**1.** Une composition comprenant une première composition qui comprend un polymère à base d'éthylène et une huile, dans laquelle la première composition a la propriété suivante telle que déterminée par diffusion des rayons X aux petits angles : $(L_{huile} - L_{sans\ huile})/L_{sans\ huile} > 10\ \%$,
où $L_{huile}$ est la longue période du polymère avec de l'huile, et
$L_{sans\ huile}$ est la longue période du polymère sans huile,
et dans laquelle le polymère à base d'éthylène est un polyéthylène basse densité (LDPE) avec une distribution des masses moléculaires (Mw(conv)/Mn(conv)) supérieure ou égale à 7.

**2.** La composition de la revendication 1, dans laquelle la première composition a la propriété suivante telle que déterminée par diffusion des rayons X aux petits angles : $[[L_A/L_A + L_c)]_{HUILE} - [L_A/(L_A + L_C)]_{SANS\ HUILE]}/[L_A/L_A + L_C)]_{SANS\ HUILE} \geq 7\ \%$, où $L_A$ est l'épaisseur lamellaire amorphe moyenne, et $L_c$ est l'épaisseur lamellaire cristalline moyenne.

**3.** La composition de n'importe lesquelles des revendications précédentes, dans laquelle le polymère à base d'éthylène a un rapport des masses moléculaires, Mz(abs)/Mz(conv), supérieur à 2,2 tel que déterminé par CPG.

**4.** La composition de n'importe lesquelles des revendications précédentes, dans laquelle le polymère à base d'éthylène a une valeur de MR inférieure à 200 g/10 min, où MR = 12 x RR où M est l'indice de fluidité à l'état fondu en g/10 min tel que mesuré conformément à l'ASTM D-1238-04, condition 190 °C/2,16 kg et R est le rapport rhéologique (RR) ou V0-1/V100, où V0,1 est la viscosité à l'état fondu du polymère à 190 °C, mesurée à une vitesse de cisaillement de 0,1 rad/sec, et V100 est la viscosité à l'état fondu du polymère à 190 °C, mesurée à une vitesse de cisaillement de 100 rad/sec, dans laquelle les viscosités à l'état fondu sont mesurées sous une atmosphère azotée, à l'aide d'un spectromètre dynamique mécanique, sous un balayage dynamique réalisé de 0,1 à 100 rad/sec.

**5.** La composition de n'importe lesquelles des revendications précédentes, dans laquelle le polymère à base d'éthylène a une masse moléculaire moyenne en nombre (Mn(conv)) supérieure à 2 800 g/mole, telle que déterminée par CPG.

**6.** La composition de n'importe lesquelles des revendications précédentes, dans laquelle le polymère à base d'éthylène a une masse volumique allant de 0,900 à 0,940 g/cm$^3$ telle que mesurée conformément à l'ASTM D-792-08.

**7.** La composition de n'importe lesquelles des revendications précédentes, dans laquelle le polymère à base d'éthylène a un indice de fluidité à l'état fondu (I2) allant de 0,2 à 50 g/10 min tel que mesuré conformément à l'ASTM D-1238-04, condition 190 °C/2,16 kg.

**8.** La composition de n'importe lesquelles des revendications précédentes, dans laquelle le polymère à base d'éthylène a une température de fusion supérieure ou égale à 100 °C.

**9.** La composition de n'importe lesquelles des revendications précédentes, dans laquelle le polymère à base d'éthylène est présent en une quantité allant de 2 à 50 pour cent en poids, rapporté au poids de la composition.

**10.** La composition de n'importe lesquelles des revendications précédentes, dans laquelle l'huile est présente en une quantité allant de 10 à 70 pour cent en poids, rapporté au poids de la composition.

11. La composition de n'importe lesquelles des revendications précédentes, dans laquelle l'huile est présente en une quantité allant de 35 à 90 pour cent en poids, rapporté à la somme des poids du polymère à base d'éthylène et de l'huile.

12. La composition de n'importe lesquelles des revendications précédentes, comprenant en outre un polymère à base d'oléfine sélectionné dans le groupe constitué d'un polymère à base de propylène, d'un interpolymère à blocs multiples d'oléfine, d'un copolymère à blocs multiples d'oléfine, d'un interpolymère linéaire ramifié de manière homogène, d'un copolymère linéaire ramifié de manière homogène, d'un interpolymère substantiellement linéaire ramifié de manière homogène et d'un copolymère substantiellement linéaire ramifié de manière homogène.

(a, no oil)  (b, oil inclusion)

Figure 1  Schematic figure of limited oil inclusion in the lamellar stacks
( ▬▬ represents lamella, and – represent oil)

(a, no oil)  (b, oil inclusion)

Figure 2  Schematic figure of exfoliated lamellae in oil
( ▬▬ represents lamella, and – represent oil)

EP 2 576 687 B1

FIGURE 3

FIGURE 4

After thermal treatment at 50C in oil for 4 days

Small crystals in control sample

Crystallinity ~ 10%

EA0386

FIGURE 5

This shoulder with similar d-spacing as original lamellar stacks (~14nm) corresponds to the unaffected lamellar stacks when annealed at 100°C

14.4nm

27.9nm

increase 94%

LDPE 3I 100°C thermal treated

LDPE 3I in oil 100°C thermal treated

FIGURE 6

FIGURE 7

FIGURE 8

FIGURE 9

FIGURE 10

FIGURE 11

A. CE-22-2     B. IE-22-5

FIGURE 12

FIGURE 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5505773 A
- US 5741843 A
- WO 2009097560 A
- US 20060173123 A
- US 5082348 A
- US 7101247 B
- US 6905431 B
- US 5994450 A
- US 6026527 A
- US 6835015 B
- US 6413458 B
- US 20030236313 A
- US 20040048018 A
- WO 2005090427 A
- US 20060199931 A
- US 7608668 B
- US 20060199914 A
- US 20060199912 A
- US 7671106 B
- US 7579408 B
- US 20060199908 A
- US 7355089 B
- US 7622529 B

- US 7671131 B
- US 7524911 B
- US 7662881 B
- US 20060199887 A
- US 7514517 B
- US 7666918 B
- US 7687442 B
- US 7582716 B
- US 7504347 B
- US 20060199983 A
- US 3645992 A, Elston
- EP 0129368 A
- EP 0260999 A
- US 4701432 A
- US 4937301 A
- US 4935397 A
- US 5055438 A
- WO 9007526 A
- US 5272236 A
- US 5278272 A
- US 6054544 A
- US 6335410 B
- US 6723810 B

**Non-patent literature cited in the description**

- **STROBL, G. R. ; SCHNEIDER, M.** *J. Polym. Sci., Polym. Phys. Ed.,* 1980, vol. 18, 1343
- Small Angle X-ray Scattering. Academic Press, 1983
- **RULAND, W.** *J. Appl. Crystallogr.,* 1971, vol. 4, 70
- Annual Book of ASTM Standards. vol. 15.06
- **WILLIAMS ; WARD.** *J. Polym. Sci., Polym. Let.,* 1968, vol. 6, 621

- **MOUREY ; BALKE.** Chromatography Polym. 1992
- **BALKE ; THITIRATSAKUL ; LEW ; CHEUNG ; MOUREY.** Chromatography Polym. 1992
- **ZIMM, B.H.** *J.Chem. Phys.,* 1948, vol. 16, 1099
- **KRATOCHVIL, P.** Classical Light Scattering from Polymer Solutions. Elsevier, 1987
- **YAU ; GILLESPIE.** *Polymer,* 2001, vol. 42, 8947-8958